# EUROPÄISCHE PATENTANMELDUNG

(11) **EP 0 887 636 A1**
(43) Veröffentlichungstag der Anmeldung: **30.12.1998**
(21) Anmeldenummer: 98108036.9
(22) Anmeldetag: 02.05.1998
(51) Int. Cl.: G01N 15/02, G01N 1/14

(54) **Verfahren und Vorrichtung zur Ermittlung von Partikelgrössen und Partikelgeschwindigkeiten**

(30) Priorität: 10.06.1997 DE 19724364
(71) Anmelder: Forschungszentrum Karlsruhe GmbH, 76133 Karlsruhe (DE)
(72) Erfinder: Löffler-Mang, Martin, Dr., 76131 Karlsruhe (DE)

(57) **Zusammenfassung**

Die Erfindung betrifft ein Verfahren zur Ermittlung von Partikelgrößen und Partikelgeschwindigkeiten.

Aufgabe der Erfindung ist es, das Verfahren so auszugestalten, daß auch Teilchen mit einem Durchmesser kleiner als 0,35 mm gemessen werden können.

Gelöst wird diese Aufgabe durch Erzeugung eines Lichtbandes als Messraum mit rechteckigem Querschnitt, wobei der Messraum so dimensioniert ist, daß sich im Mittel immer nur ein Teilchen im Messraum befindet, Erfassen der Intensität des Lichtes welches den Messraum verläßt mit einem Detektor, Aufzeichnen des zeitlichen Verlaufs des Detektorausgangssignals und Ermitteln der Teilchengöße aus der Höhe der Änderung des Detektorausgangssignals und der Teilchengeschwindigkeit aus der Dauer der Änderung des Detektorausgangssignals.

## Beschreibung

Die Erfindung betrifft ein Verfahren und eine Vorrichtung zur Ermittlung von Partikelgrößen und Partikelgeschwindigkeiten.

Im Bereich der Partikelmeßtechnik ist die Bestimmung von Partikeldurchmesser und -geschwindigkeit simultan an Einzelteilchen wichtig. Im Vordergrund stehen Untersuchungen an Regentropfen mit ihren typischen Größen und Geschwindigkeiten. Die Kenntnis dieser Tropfenspektren ist von Bedeutung bei der Auswertung der Daten von Niederschlags-Radargeräten.

Die verbreitete Standardmethode zur Bestimmung der Regentropfenspektren ist das Disdrometer nach Joss und Waldvogel (1967): Ein Spektrograph für Niederschlagstropfen mit automatischer Auswertung. *PAGEOPH* 68, 240-246. Hierbei wird der Impuls von Tropfen, die auf einen Styroporkörper auftreffen, elektromechanisch umgesetzt und mittels einer empirischen Beziehung zwischen Tropfengröße und -geschwindigkeit in das Größenspektrum umgerechnet.

Es kann jedoch keine Geschwindigkeitsbestimmung vorgenommen werden. Damit bleiben die Anwendungen zunächst auf Regentropfen beschränkt. Für die Bestimmung von integralen Größen (z. B. Regenrate) müssen zusätzliche Annahmen getroffen werden. Ebenfalls ist das Gerät nicht in der Lage, Tropfen mit Durchmessern unterhalb 0.35 mm zu messen; die untere Grenze für Regentropfen liegt aber eher bei 0,1 mm Durchmesser. Und schließlich ist das Gerät von seinen Abmessungen nicht geeignet zum nachträglichen Einbau in vorhandene Regenmesser.

Aufgabe der Erfindung ist es, ein Verfahren und eine Vorrichtung der e. g. Art so auszugestalten, daß auch Teilchen mit einem Durchmesser kleiner als 0,35 mm gemessen werden können.

Gelöst wird diese Aufgabe durch die Merkmale der Patentansprüche 1 und 3. Die Unteransprüche beschreiben vorteilhafte Ausgestaltungen der Erfindung.

Die Erfindung zeichnet sich durch folgende besondere Vorteile aus:
**(i)** Durch die simultane Messung von Partikeldurchmesser und - geschwindigkeit er-öffnen sich eine Reihe von neuen Möglichkeiten:
   - durch Plausibilitätsbetrachtungen können Randeffekte, Mehrfachtropfen und Fehlmessungen korrigiert werden; dabei wird ausgenutzt, daß Größe und Geschwindigkeit in den meisten Anwendungen nicht unabhängig voneinander beliebige Werte annehmen. Ein Tropfen, der nicht frei fällt, sondern am Gehäuse abläuft, hat z. B. eine viel zu geringe Geschwindigkeit und kann aussortiert werden; oder große, schnelle Partikeln, die nur noch den Rand des Lichtbandes streifen, werden als zu klein für ihre Geschwindigkeit detektiert und können korrigiert werden.
   - Regenmessungen können ohne zusätzliche Annahmen ausgewertet werden, es wird keine (teilweise unsichere) empirische Beziehung zwischen Tropfengröße und Tropfengeschwindigkeit benötigt.
   - Es werden neue Anwendungsbereiche erschlossen.
**(ii)** Durch Anpassung der Lichtbandgeometrie sind Regentropfen bereits ab einem Durchmesser von 0.1 mm detektierbar.
**(iii)** Die kompakte Bauweise des Meßkopfes erlaubt die Integration des Tropfen-spektrometers in Standardregenmessern. Damit ist z. B. auch die nachträgliche Ausrüstung von bestehenden Meßnetzen mit geringem Aufwand möglich.

Neben weiteren meteorologischen sind aber auch technische Anwendungen denkbar, wie z. B. die Überprüfung der Sprüheigenschaften von Sprinklerdüsen und damit eine Qualitätskontrolle bei der Fertigung oder die Bestimmung der Agglomeratgröße und -geschwindigkeit von Kaffee und Zucker bei der Produktion von Instantgetränken. Prinzipiell können Partikeln verschiedenster Art gemessen werden, solange die Form einigermaßen kompakt ist (z. B. auch Kalkstein oder Grieß). Für nadelförmige Gebilde wird das Ergebnis eher zufällig und die Interpretation der Meßwerte schwierig.

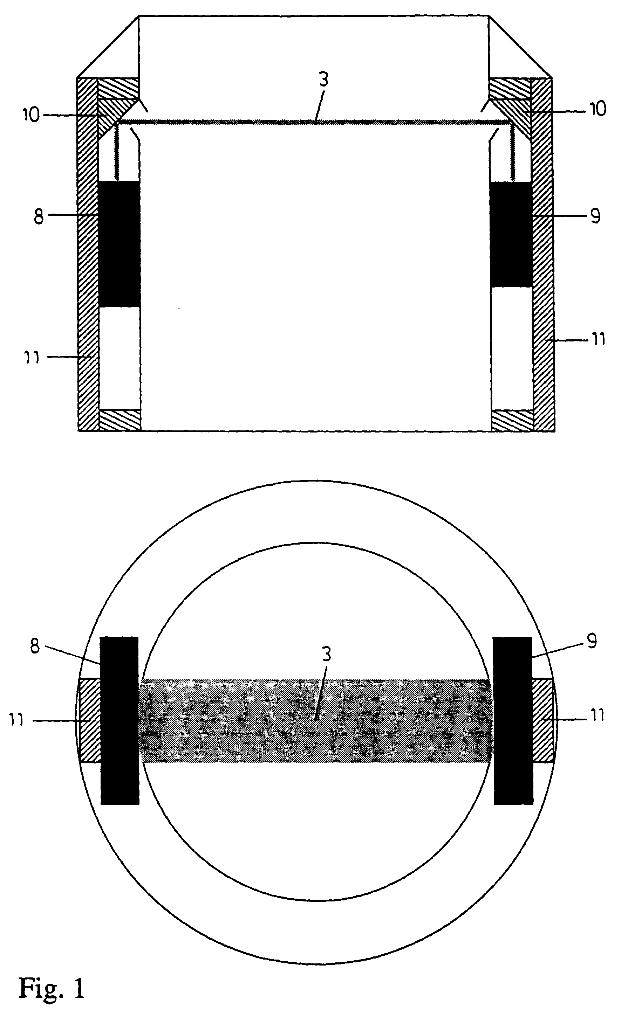

Die Erfindung wird im folgenden anhand eines Ausführungsbeispiels mit Hilfe der Figuren näher erläutert.
Dabei zeigt die Fig. 1 das Schema einer Vorrichtung in Längs- und Querschnitt,
die Fig. 2 das Erscheinungsbild von zwei unterschiedlich großen Tropfen im Zeit-Intensitätsdiagramm und die
Fig. 3 eine Möglichkeit zur Erzeugung eines homogen ausgeleuchteten quaderförmigen Raumes.

Der untere Teil der Fig. 1 zeigt einen Querschnitt durch das doppelwandige Gehäuse eines Standardregenmessers, wobei zwischen den beiden konzentrischen Wänden die optischen Bauteile 8 und 9, zur Erzeugung des ausgeleuchteten Messraums 3 und zur Abbildung des Lichts der Lichtquelle 1 auf den Detektor 2, mit Hilfe der Halterungen 11 angebracht sind.

Bei dem darüber dargestellten Längsschnitt ist die äußere Wand des doppelwandigen Gehäuses der Einfachheit halber weggelassen. Zwischen den beiden Wänden, gehaltert mit Hilfe der Halterungen 11, sind die OptischenBauteile 8 und 9 dargestellt, wobei die Strahlung innerhalb der Doppelwand senkrecht verläuft und mit Hilfe der beiden Umlenkspiegel 10 in die Waagrechte umgelenkt wird. Das Licht tritt durch zwei mit Blenden versehene Öffnungen in das Innere des Gefäßes und bildet dort den Messraum 3, dessen Länge sich über die ganze lichte Weite des Gefäßes erstreckt. Breite und Dicke des Messraums 3 werden jeweils an das Messproblem angepaßt.

Fallen Partikeln durch das horizontale Lichtband, dann schwächen sie das auf eine Photodiode gebündelte Licht am Ende des Lichtbandes ab (Extinktion). Die Stärke der Abschwächung ist ein Maß für den Partikeldurchmesser, die Dauer der Abschwächung ein Maß für die Partikelgeschwindigkeit. Entscheidend für die Auswertbarkeit ist die Geometrie des Lichtbandes, deshalb wurde ein paralleles Band mit rechteckigem Querschnitt gewählt. Ein solches Band kann mit Zylinderoptiken erzeugt werden, Ruck (1990) (Hrsg.) (1990): Lasermethoden in der Strömungsmeßtechnik. AT-Fachver-lag GmbH, Stuttgart, nennt dafür verschiedene optische Anordnungen.

Die Dimensionierung des Lichtbandes hängt von der gewünschten Anwendung ab. Die Breite b wird jeweils ein Vielfaches der Dicke x betragen (Faktor 5 bis 20). Im einzelnen bestimmen die erwarteten Partikeldurchmesser (D) und -geschwindigkeiten (v) die Abmessungen. Für drei Anwendungsbeispiele sind Anhaltswerte für b und x angegeben:
(i) Regen: b=30mm, x=3mm;
(ii) Schnee: b=60mm, x=3mm (D groß, v klein);
(iii) Sprinkler: b=10mm, x=2mm (D klein, v groß).

Das Tropfenspektrometer besteht insgesamt aus drei funktionalen Komponenten, die teilweise aber in ein Gehäuse integriert werden können. Das oben beschriebene Lichtband befindet sich im Meßkopf, der durch den gefalteten Strahlengang (zwei Umlenkspiegel) geeignet ist zur nachträglichen Ausrüstung von Standardregenmessern.

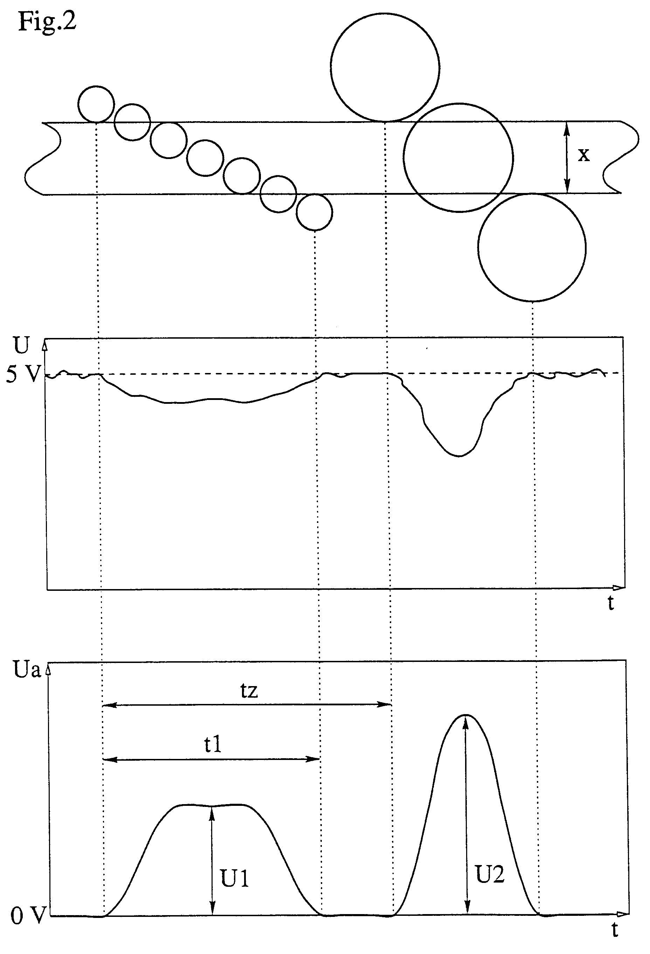

Die Fig. 2 zeigt oben zwei unerschiedlich große Tropfen in verschiedenen vertikalen Positionen im Messraum 3. Der Mittelteil der Fig. 2 zeigt den diesen Positionen zugeordneten zeitlichen Verlauf des Detektorsignals. Der untere Teil zeigt das von der Auswerteeinheit (hier nicht dargestellt) bearbeitete Detektorsignal.

Beim Durchtritt von Partikeln durch das Lichtband entstehen Spannungssignale, wobei zwei Fälle unterschieden werden können: Partikeln kleiner als Lichtbanddicke (Signal mit Plateau), Partikeln größer als Lichtbanddicke (Signal ohne Plateau). Zur weiteren Verarbeitung wird das Signal aufbereitet: Abtrennung des Gleichspannungspegels, Invertierung, Verstärkung, Filterung. Dann wird mit hoher Frequenz (100 kHz) digitalisiert. Schließlich wird eine Spitzenwerterkennung als Maß für den Partikeldurchmesser (U1 und U2) durchgeführt, das Zeitintervall von Signalanfang bis Signalende (t1) erfaßt (für die Bestimmung der Partikelgeschwindigkeit aus diesem Zeitintervall muß der Partikeldurchmesser bekannt sein, da der Weg der Lichtbanddicke plus dem Teilchendurchmesser entspricht) und abschließend die Zeit seit der vorangegangenen Partikel für einen exakten Zeitbezug (tz) registriert. Diese Wertetripel werden abgespeichert und können zur Berechnung von Verteilungen und integralen Größen verwendet werden.

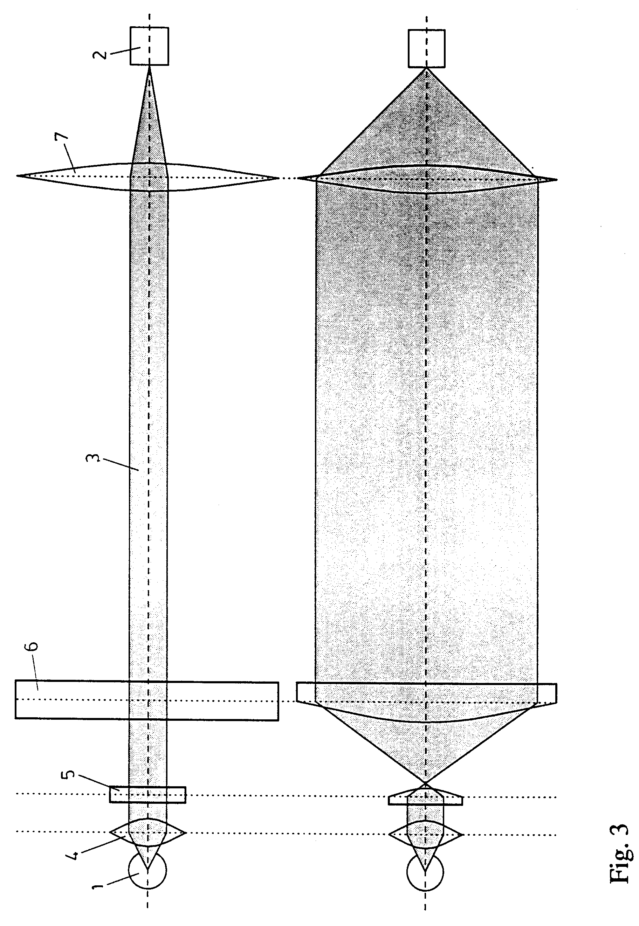

Beim optischen Aufbau von Fig. 3 wird das Licht der Lichtquelle 1 mit einer sphärischen Linse in ein Parallelbündel umgewandelt und mit einem Teleskop aus zwei Zylinderlinsen 4, 5 zu Messraum 3 aufgeweitet und anschließend mit einer Linse 7 auf den Detektor 2 abgebildet. Die Umlenkspiegel sind hier nicht dargestellt.

## Patentansprüche

1. Verfahren zur Ermittlung von Partikelgrößen und Partikelgeschwindigkeiten mit folgenden Verfahrensschritten:
a) Erzeugung eines Lichtbandes als Messraum (3) mit rechteckigem Querschnitt, wobei der Messraum so dimensioniert ist, daß sich im Mittel immer nur ein Teilchen im Messraum befindet.
b) Erfassen der Intensität des Lichtes welches den Messraum verläßt mit einem Detektor (2),
c) Aufzeichnen des zeitlichen Verlaufs des Detektorausgangssignals und
d) Ermitteln der Teilchengöße aus der Höhe der Änderung des Detektorausgangssignals und der Teilchengeschwindigkeit aus der Dauer der Änderung des Detektorausgangssignals.

2. Verfahren nach Anspruch 1, dadurch gekennzeichnet, daß die Partikeln deren Größe und Geschwindigkeit ermittelt werden Regentropfen sind.

3. Vorrichtung zur Ermittlung von Partikelgrößen und Partikelgeschwindigkeiten bestehend aus:
a) einer Lichtquelle (1), optischen Bauteilen (8, 9) und einem Detektor (2), wobei das Licht der Lichtquelle (1) mit Hilfe der optischen Bauteile (8, 9) auf den Detektor (2) abgebildet und derart geformt wird, daß es ein quaderförmiges Volumen (3) durchstrahlt und
b) einer Auswerteeinheit zur Auswertung des Detektorsignals.

4. Vorrichtung nach Anspruch 3 dadurch gekennzeichnet, daß sie in einem oben offenen Gefäß derart gehaltert ist, daß das quaderförmig durchstrahlte Volumen (3) mindestens einen Teil der lichten Öffnung des Gefäßes einnimmt.

5. Vorrichtung nach Anspruch 3 oder 4, dadurch gekennzeichnet, daß das Gefäß ein Behälter ist, wie er üblicherweise zur Bestimmung der Regenmenge eingesetzt wird.

6. Vorrichtung nach einem der Ansprüche 3 bis 5, dadurch gekennzeichnet, daß die optischen Bauteile (8, 9) so angeordnet sind, daß der Lichtsrahl im Bereich der optischen Bauteile in Richtung senkrecht zur Gefäßöffnung verläuft und daß der Lichtstrahl mit Hilfe von Umlenkspiegeln (10) im Bereich des quaderförmig durchstrahlten Volumens (3) parallel zur Öffnung des Gefäßes geführt wird.
